# EUROPEAN PATENT SPECIFICATION

(11) **EP 2 184 126 B1**
(45) Date of publication and mention of the grant of the patent: **02.07.2014**
(21) Application number: 09014083.1
(22) Date of filing: 10.11.2009
(51) Int. Cl.: B23D 59/00, B27B 9/04

(54) **Cutting machine**
Schneidemaschine
Machine de coupe

(30) Priority: 11.11.2008 JP 2008288774
(43) Date of publication of application: 12.05.2010
(73) Proprietor: Makita Corporation, Anjo-shi, Aichi 446-8502 (JP)
(72) Inventor: Fukuoka, Toru, Anjo-shi, Aichi 446-8502 (JP); Nakashima, Tatsuo, Anjo-shi, Aichi 446-8502 (JP)
(74) Representative: Kramer - Barske - Schmidtchen

(56) References cited:
- EP-A2- 1 270 125
- DE-C- 834 897
- JP-A- S6 394 801
- JP-U- S57 201 304
- US-A- 3 504 716
- US-A- 5 924 207

## Description

### BACKGROUND OF THE INVENTION

### Field of the Invention

The invention relates to a cutting machine according to the preamble of claim 1. Such a machine is known from EP 1 270 125 A2.

### Description of the Related Art

Japanese laid-open patent publication No. 2001-62803 discloses an electric circular saw. The known electric circular saw has a cutting-line guide (cutting-line mark) on a front portion of a base in a blade cutting direction and an observation hole formed rearward of the cutting-line guide. An user of circular saw performs the operation of cutting a workpiece while aligning the marks on the cutting-line guide and the observation hole with a cutting line marked on the workpiece.

The above-mentioned cutting-line guide and observation hole serve to indicate the cutting direction of the blade and is therefore designed to be located on a cutting line of the blade. Due to manufacturing variations or assembling variations, however, the marks on the cutting-line guide and the observation hole may be deviated from the cutting line of the blade. In such a case, the precision of cutting of the electric circular saw is reduced. Therefore, in the known cutting machine, further improvement is required in this point.

### SUMMARY OF THE INVENTION

It is, accordingly, an object of the invention to improve a precision of cutting work for a cutting machine.

The above-described object can be achieved by providing a cutting machine according to claim 1. A cutting machine is provided to include a tool body having a blade which is rotationally driven to cut a workpiece, and a base having an opening through which part of the blade protrudes downward. The base is placed on an upper surface of the workpiece and moved together with the tool body in order to cut the workpiece by the blade. The "cutting machine" here typically represents a portable circular saw for wood cutting or a portable cutter for stone or metal cutting.
Further, the representative cutting machine further includes a blade cutting direction indicating member for indicating a cutting direction of the blade. The blade cutting direction indicating member is formed on a front end of the base in a direction of movement of the base and can be adjusted in mounting position with respect to the base by being movable in a rotational manner in a direction transverse to the cutting direction of the blade. The "cutting direction of the blade" may refer to the direction in which the blade moves (the cutting machines moves) when the cutting machine cuts the workpiece. Further, the manner of "moving in a rotational manner" preferably includes both the manner in which the center of the rotational displacement of the blade cutting direction indicating member is fixed and the manner in which such center is variable. The blade cutting direction indicating member also serves as a blade positioning member for positioning the blade with respect to a cutting line marked on the workpiece.

The blade cutting direction indicating member for indicating the cutting direction of the blade is formed on a front end of the base in a direction of movement of the base and can be adjusted in mounting position with respect to the base by being movable in a rotational manner in a direction transverse to the cutting direction of the blade. Therefore, if a deviation is caused between the indicating direction of the blade cutting direction indicating member and the cutting direction of the blade due to manufacturing variations or assembling variations, the indicating direction (orientation) of the blade cutting direction indicating member can be adjusted to be in agreement with the cutting direction of the blade. Further, the blade cutting direction indicating member also serves as a blade positioning member for positioning the blade with respect to a cutting line marked on the workpiece. Therefore, when a cutting operation is performed along a cutting line by utilizing the blade cutting direction indicating member, high precision of cutting can be realized by exactly adjusting the indicating direction of the blade cutting direction indicating member with respect to the cutting direction of the blade.

As another aspect, the blade cutting direction indicating member may have a first direction indicating part for indicating the cutting direction of the blade and a second direction indicating part for indicating the same line as the first direction indicating part, and the direction indicating parts are integrally formed with the blade cutting direction indicating member. Further, an observation hole for cutting-line alignment is formed in the base between the blade and the blade cutting direction indicating member. The first direction indicating part is located above the observation hole, and the second direction indicating part is located forward of the first direction indicating part. Therefore, the blade cutting direction can be indicated by utilizing the two direction indicating parts. Specifically, the cutting direction of the blade can be exactly indicated by adjusting the position (orientation) of the blade cutting direction indicating member such that the first and second direction indicating parts are parallel to the direction of the face of the blade. Further, the parallelism of the first and second direction indicating parts to the cutting line can be more exactly achieved. As a result, higher-precision cutting operation can be performed. Further, the blade cutting direction indicating member has the first and second direction indicating parts integrally formed therewith, and compared with the case in which these parts are separately formed, the blade cutting direction indicating member can be easily manufactured and assembling errors are not caused..

Further, the first direction indicating part may include a side surface of a projection which projects in a direction opposite to the cutting direction of the blade and faces the observation hole, and the second direction indicating part may include a side surface of a notch which is recessed in a direction opposite to the cutting direction of the blade. With this construction, the two direction indicating parts of the blade cutting direction indicating member can be rationally provided.

Further, two blade cutting direction indicating members having the same shape may be provided and arranged side by side in the cutting direction of the blade with respect to the base. With this construction, compared with the case in which only one blade cutting direction indicating member is provided, the cutting direction of the blade can be more exactly indicated. Further, the blade cutting direction indicating members can be designed as common parts, so that cost reduction can be achieved.

Further, a cutting edge plate is provided on an underside of the base. An end of the cutting edge plate which is visible via an opening of the base forms a direction indicating part for indicating the cutting direction of the blade, and the cutting edge plate can be adjusted in mounting position with respect to the underside of the base by moving in parallel or in a rotational manner in a direction transverse to the cutting direction of the blade and thus also serves as the blade cutting direction indicating member. With this construction, an existing part or the cutting edge plate can be rationally utilized as a blade cutting direction indicating member.

Other objects, features and advantages of the present teachings will be readily understood after reading the following detailed description together with the accompanying drawings and the claims.

### BRIEF DESCRIPTION OF THE DRAWINGS

FIG. 1 is a side view showing an entire circular saw 100 according to a first embodiment.
FIG. 2 is a plan view of the entire circular saw 100.
FIG. 3 is a plan view showing a front portion of the circular saw 100 including a top guide 121 and an observation hole 117, wherein a blade case 103 is not shown.
FIG. 4 is a plan view showing the front portion of the circular saw 100 including the top guide 121 and the observation hole 117.
FIG. 5 is a sectional plan view showing the top guide 121.
FIG. 6 is a sectional view taken along line A-A in FIG. 2.
FIG. 7 is a sectional view taken along line B-B in FIG. 2.
FIG. 8 is a view for illustrating a deviation α caused between the indicating direction of the top guide 121 and the cutting direction of the blade 113, wherein FIG. 8(A) shows the deviation α caused therebetween and FIG. 8(B) shows a state in which the deviation α has been corrected.
FIG. 9 is a plan view for illustrating a structure of indicating the cutting direction of the blade 113 according to a second embodiment.
FIG. 10 is a plan view for illustrating a structure of indicating the cutting direction of the blade 113 according to a third embodiment.
FIG. 11 is a bottom view thereof.
FIG. 12 is a sectional view taken along line C-C in FIG. 10.

### DEATAILED DESCRIPTION OF THE INVENTION

Each of the additional features and method steps disclosed above and below may be utilized separately or in conjunction with other features and method steps to provide and manufacture improved cutting machine and method for using such cutting machine and devices utilized therein. Representative examples of the present invention, which examples utilized many of these additional features and method steps in conjunction, will now be described in detail with reference to the drawings. This detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention, which detailed description will now be given with reference to the accompanying drawings.

### (First Embodiment)

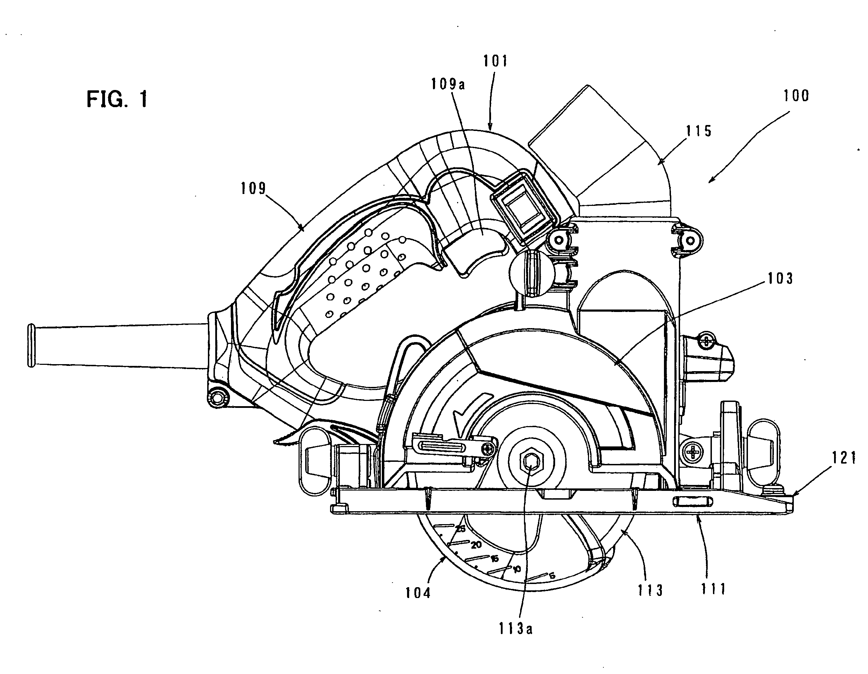

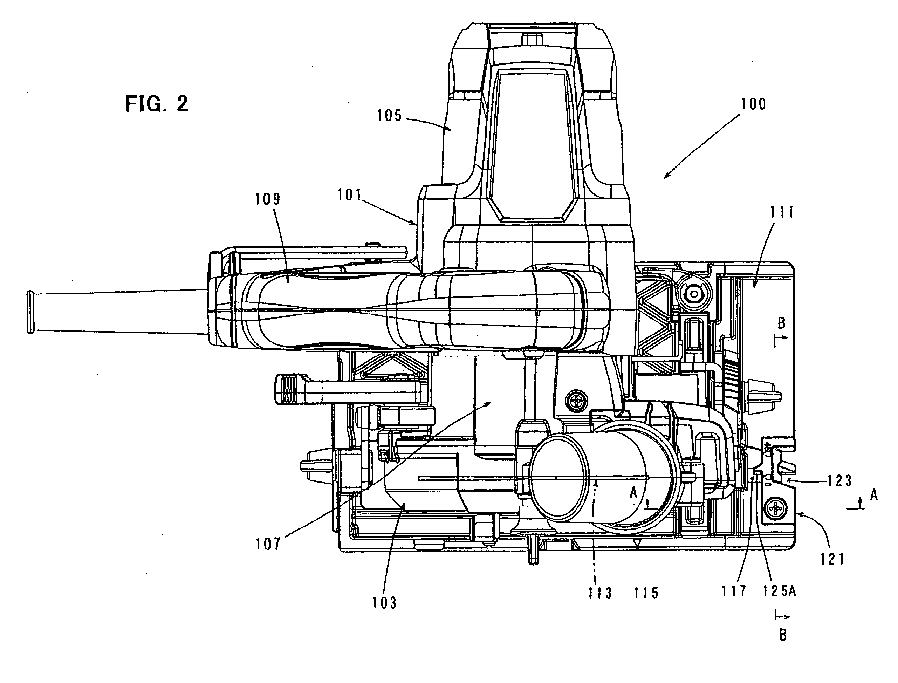

A first embodiment is now explained with reference to the drawings. FIG. 1 is a side view showing an entire circular saw 100 as a representative embodiment of the cutting machine. FIG. 2 is a plan view of the entire circular saw 100. As shown in FIGS. 1 and 2, the circular saw 100 according to this embodiment mainly includes a base 111 which can be placed on a workpiece (not shown), and a circular saw body 101 disposed above the base 111 and connected to the base 111. The circular saw body 101 is a feature that corresponds to the "tool body".

The contour of the circular saw body 101 is defined by a blade case 103 that houses a disc-like blade 113 which is driven to rotate in a vertical plane, a motor housing 107 that houses a driving motor (not shown), a gear housing 107 that houses a power transmitting mechanism part (not shown) for transmitting the rotating output of the driving motor to the blade 113, and a generally D-shaped handgrip 109 which is integrally formed on the top of the motor housing 107. The handgrip 109 has a trigger switch 109a that is depressed by the user to drive the driving motor. The blade 113 is a feature that corresponds to the "saw blade".

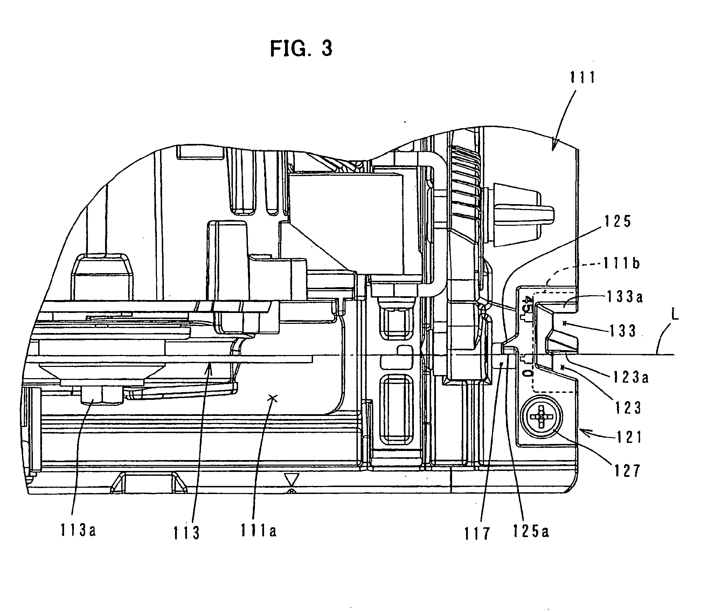

The power transmitting mechanism part housed within the gear housing 107 decelerates the rotating output of the driving motor and transmits it to the blade 113, so that the blade 113 is caused to rotate on a rotation spindle 113a. A lower edge portion of the blade 113 protrudes from the underside of the base 111 through an opening 111a (see FIG. 3) of the base 111. A safety cover 104 is rotatably attached to the rotation spindle 113a and covers the lower half of the blade 113.

In cutting a workpiece, when the front end (right end as viewed in FIGS. 1 and 2) of the base 111 is placed on the workpiece and moved forward (rightward as viewed in FIGS. 1 and 2), the workpiece pushes the front end of the safety cover 104, so that the safety cover 104 rotates on the rotation spindle 113a through the opening 111 and is housed within the blade case 103. After completion of the cutting operation, when the circular saw 100 is lifted up from the workpiece, the safety cover 104 is returned by a spring (not shown) to its initial position to cover the lower edge portion of the blade 113.

The blade case 103 is provided with a chips discharge tube 115 for discharging chips to the outside which are generated within the blade case 103 during an operation of cutting a workpiece by the blade 113. A dust collecting bag or a dust collecting hose of a dust collecting machine can be connected to the chips discharge tube 115. The chips generated during the cutting operation of the blade 113 fly out in a tangential direction of a front portion of a cutting region of the blade 113 on the front side in the cutting direction, or generally upward, and led into the dust collecting bag or the dust collecting machine through the chips discharge tube 115.

As shown in FIG. 2, the base 111 is formed by a generally rectangular plate and has a top guide 121 on the front end of the base 111 on the front end side in the direction of movement for cutting the workpiece. The top guide 121 serves to indicate the cutting direction of the blade 113 and to align the blade 113 with a cutting line marked on the workpiece. Further, an observation hole 117 for cutting-line alignment is formed between the top guide 121 and the blade 113. The top guide 121 is a feature that corresponds to the "blade cutting direction indicating member" and the "blade positioning member with respect to a cutting line" . The observation hole 117 is a feature that corresponds to the "observation hole".

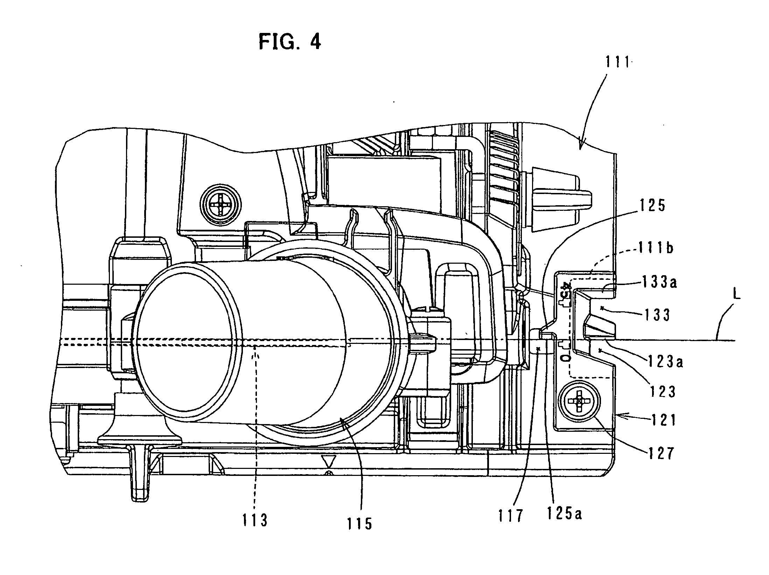

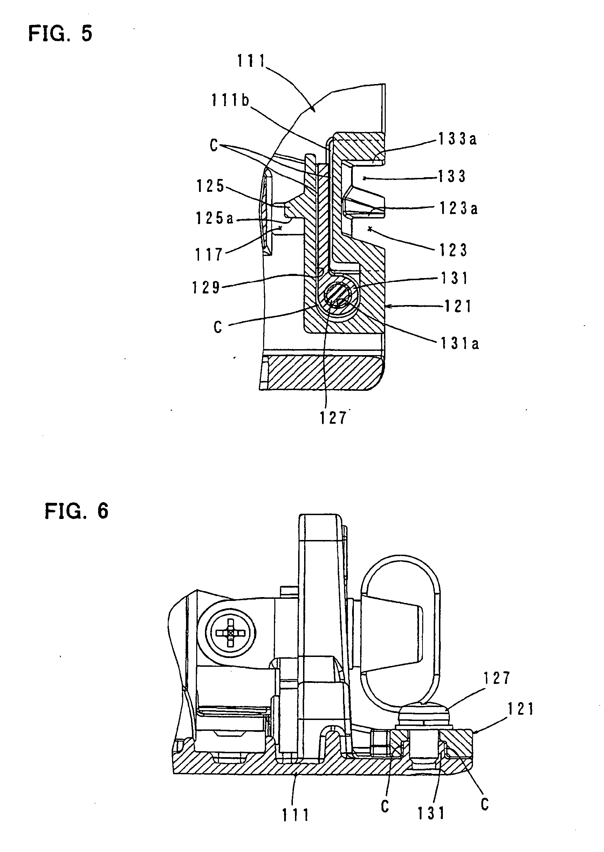

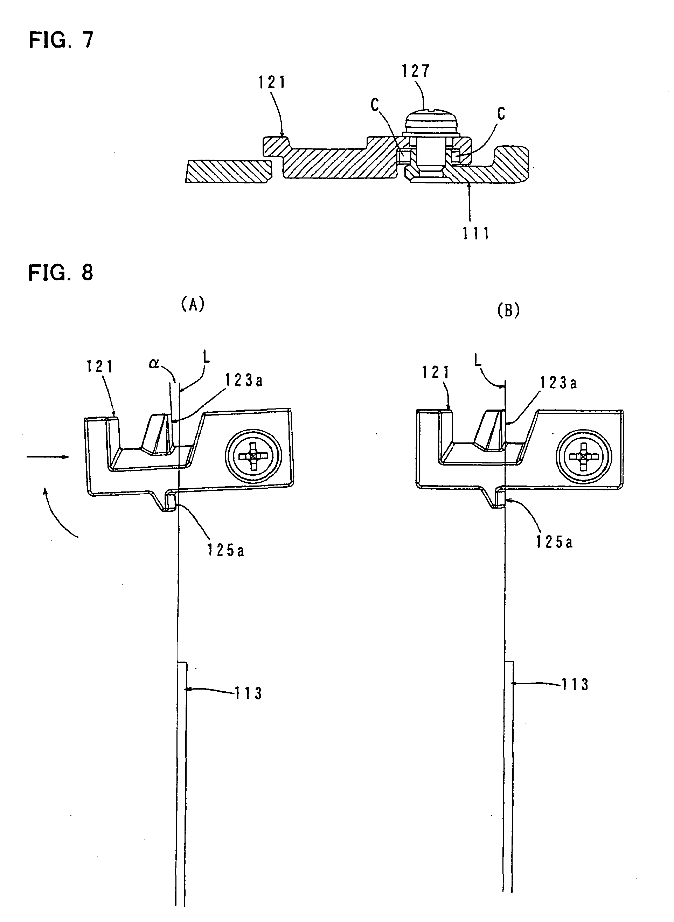

FIGS. 3 and 4 are enlarged plan views showing a front portion of the circular saw 100 including the top guide 121 and the observation hole 117. In FIG. 3, however, the blade case 103 is not shown. Further, FIG. 5 is a sectional plan view showing the top guide 121. FIG. 6 is a sectional view taken along line A-A in FIG. 2 and FIG. 7 is a sectional view taken along line B-B in FIG. 2

The top guide 121 comprises a generally rectangular plate which is long in a direction transverse to the cutting direction (the direction of the face) of the blade 113. The top guide 121 has a front direction indicating face 123a which is formed by a side surface of a notch 123 on the front side of the top guide 121 in the direction of movement, and a rear direction indicating face 125a which is formed by a side surface of a projection 125 on the rear side of the top guide 121 in the direction of movement. The rear direction indicating face 125a and the front direction indicating face 123a are features that correspond to the "first direction indicating part" and the "second direction indicating part", respectively.

The notch 123 is generally U-shaped with a predetermined depth extending rearward from a front end surface of the top guide 121, and a side surface of the notch which extends straight in the back-and-forth direction is defined as the front direction indicating face 123a. The projection 125 projects a predetermined length rearward from a rear end surface of the top guide 121, and a side surface of the projection which extends straight in the back-and-forth direction is defined as the rear direction indicating face 125a. The front direction indicating face 123a of the notch 123 and the rear direction indicating face 125a of the projection 125 are arranged in line.

As shown in FIGS. 5 to 7, the top guide 121 having the above-described construction is overlaid on a top guide mounting part 131 which is formed on the upper surface of the front end portion of the base 111 in the direction of movement. Then the mounting position of the top guide 121 can be adjusted by moving the top guide in parallel or in a rotational manner in a direction transverse to the cutting direction of the blade 113 (the direction of the rotation axis of the blade 113) with respect to the top guide mounting part 131. Further, the top guide 121 can be fastened in the adjusted position by a fastening means in the form of a set screw 127.

As shown in FIG. 5, the top guide mounting part 131 comprises a rib-like protrusion which protrudes from the upper surface of the base and extends in the lateral direction of the base. Further, a circular fastening part having a screw hole 131a for the set screw 127 is formed in one extending end of this protrusion. A recess 129 is formed on the side (underside) of the top guide 121 facing the upper surface of the base 111 and has a shape that conforms to the outside shape of the top guide mounting part 131. The top guide 121 is loosely fitted over the top guide mounting part 131 such that the top guide mounting part 131 is received in the recess 129. In this state, the top guide 121 is fastened to the top guide mounting part 131 by the set screw 127.

The recess 129 of the top guide 121 is larger than the outside shape of the top guide mounting part 131. Thus, a predetermined clearance C is formed between the inner circumferential surface of the recess 129 and the outer circumferential surface of the top guide mounting part 131, so that the top guide 121 is allowed to move with respect to the top guide mounting part 131 within the range of the clearance C. Specifically, with the set screw 127 loose, the top guide 121 which is loosely fitted over the top guide mounting part 131 is allowed to move in parallel or in a rotational manner in a direction transverse to the cutting direction of the blade 113 with respect to the top guide mounting part 131 (the base 111).

The projection 125 extends from the top guide 121 toward the observation hole 117 along the upper surface of the base 111. In other words, the projection 125 is located above the observation hole 117.

Generally, the circular saw 100 is configured to perform a bevel cutting operation on a workpiece in the state in which the circular saw body 101 is tilted in the lateral direction (the direction transverse to the cutting direction of the blade 113) around a connection between the circular saw body and the base 111 so that the blade 113 is tilted with respect to a vertical plane. Such bevel cutting operation is generally performed at an angle of 45 degrees. Therefore, the top guide 121 is provided with a bevel cutting direction indicating face 133a in order to indicate the cutting direction of the blade 113 for 45° bevel cutting operation. The bevel cutting direction indicating face 133a is formed by a side surface of a notch 133 and arranged adjacent to the front direction indicating face 123a.

Further, for alignment of the front direction indicating faces 123a, 133a with a cutting line L on the workpiece, as shown in FIG. 5, a notch 111b for cutting-line alignment is formed in the front end portion of the base 111 and generally U-shaped in plan view.

Now, operation of the above-described circular saw 100 for cutting a workpiece is explained. First, a user holds the handgrip 109 of the circular saw 100, places the base 111 of the upper surface of the workpiece, and positions the circular saw 100 such that the front and rear direction indicating faces 123a, 125a are aligned with the cutting line L (see FIGS. 3 and 4) marked on the workpiece. At this time, on the front direction indicating face 123a side, the cutting line L can be seen through the notch 123 and the notch 111b for cutting-line alignment, and on the rear direction indicating face 125a side, the cutting line L can be seen through the observation hole 117, so that cutting-line alignment can be easily made. After positioning the circular saw 100 as described above, when the user depresses the trigger switch 109a, the driving motor 131 is driven to rotate the blade 113. In this state, in order to perform the cutting operation on the workpiece, the user moves the circular saw 100 forward while aligning the front and rear direction indicating faces 123a, 125a with the cutting line L.

The top guide 121 serves to indicate the cutting direction of the blade 113 and also to position the blade 113 (the circular saw 100 itself) with respect to the cutting line L marked on the workpiece. Therefore, in order to cut the workpiece along the cutting line L with high accuracy, it is important that the indicating direction of the front and rear direction indicating faces 123a, 125a of the top guide 121 is in exact agreement with the cutting direction of the blade 113.

In the circular saw 100, the blade 113 is mounted on the circular saw body 101 side and the top guide 121 is mounted on the base 111 side, and then the base 111 and the circular saw body 101 are assembled together into the circular saw. In such construction, due to manufacturing variations or assembling variations, a deviation may be caused between the indicating direction of the top guide 121 and the cutting direction of the blade 113. In the case of such an occurrence, when the circular saw 100 is moved along the indicating direction of the top guide 121, an error is caused between the direction of the movement and the cutting direction of the blade 113.

Therefore, in this embodiment, the top guide 121 is loosely fitted over the top guide mounting part 131 via the recess 129, so that the position of the top guide 121 with respect to the blade 113 can be adjusted, with the set screw 127 loose, by moving the top guide 121 in parallel or in a rotational manner within the range of the above-described clearance C with respect to the top guide mounting part 131 in a direction transverse to the cutting direction (the direction of the face) of the blade 113. Therefore, if a deviation is caused between the indicating direction of the top guide 121 and the cutting direction of the blade 113, an adjustment can be made to correct the deviation (in such a manner that the front and rear direction indicating faces 123a, 125a are aligned with an extension line of the face of blade 113), for example, by using a ruler. In this manner, the circular saw 100 which is capable of high-precision cutting can be provided. FIG. 8(A) shows an example of a deviation α caused between the indicating direction of the top guide 121 and the cutting direction of the blade 113, and FIG. 8(B) shows a state in which the deviation α has been corrected.

Further, in this embodiment, the top guide 121 is provided with the front and rear direction indicating faces 123a, 125a which can indicate the same line. Therefore, by using the two direction indicating faces 123a, 125a, indication of the cutting direction of the blade 113 and positioning of the blade 113 with respect to the cutting line L, or the parallelism to the face of the blade 113 and the parallelism to the cutting line L, can be more exactly achieved. As a result, higher-precision cutting operation can be performed.

Further, in this embodiment, the front and rear direction indicating faces 123a, 125a are formed by forming the notch 123 and the projection 125 on the top guide 121. Therefore, the front and rear direction indicating faces 123a, 125a can be integrally formed with the top guide 121, and compared with the case in which these faces are separately formed, the direction indicating faces can be easily manufactured and assembling errors are not caused.

Further, in the above-described first embodiment, the top guide 121 is described as being provided with the front and rear direction indicating faces 123a, 125a, but it may be provided with one direction indicating face. In this case, it is preferable to provide the front direction indicating face 123a formed by the notch 123.

### (Second Embodiment)

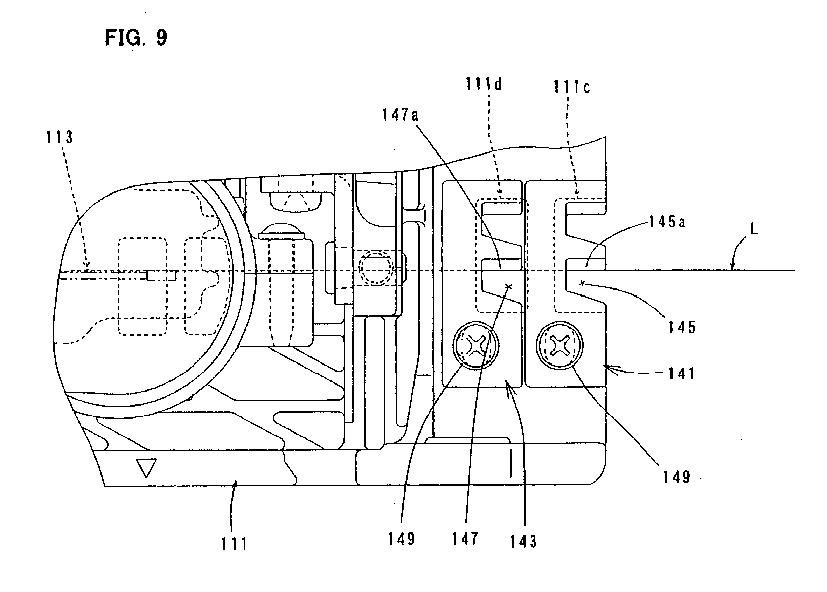

A second embodiment is now explained with reference to FIG. 9. This embodiment is a modification of the cutting direction indicating technique for indicating the cutting direction of the blade 113, and the circular saw 100 itself is similarly constructed as the above-described first embodiment. In the circular saw 100 according to this embodiment, as shown in FIG. 9, two top guides 141, 143 are disposed on the front end portion of the base 111 in the direction of movement and arranged in parallel in the longitudinal direction of the base. The front and rear top guides 141, 143 can be individually adjusted in position with respect to the base 111. The top guides 141, 143 are features that correspond to the "cutting direction indicating member".

The front and rear top guides 141, 143 have the same shape without the rear direction indicating face 125a which is formed by the side surface of the projection 125 on the top guide 121 in the above first embodiment. Specifically, in this embodiment, the front and rear top guides 141, 143 each comprise a generally rectangular plate which is long in a direction transverse to the cutting direction of the blade 113, and have respective front direction indicating faces 145a, 147a which are formed on the front side by side surfaces of notches 145, 147 of the top guide 121. The notches 145, 147 are each generally U-shaped with a predetermined depth extending rearward from front end surfaces of the top guides 145, 147, and have respective side surfaces extending straight in the back-and-forth direction which are defined as the front direction indicating faces 145a, 147a.

In a top guide mounting region on the front end portion of the base 111, as shown in FIG. 9 by broken line, a generally U-shaped notch 111c is formed for cutting-line alignment for the front top guide 141, and an observation hole 111d is formed rearward of the notch 111c for cutting-line alignment for the rear top guide 143. Further, a top guide mounting part (not shown) which is similar to the top guide mounting part 131 described in the first embodiment is formed in the vicinity of the notch 111c and the observation hole 111d.

The front and rear top guides 141, 143 have respective recesses (not shown) similar to that of the first embodiment is formed on the lower surface (underside) of the top guide. The top guides 141, 143 are loosely fitted over the top guide mounting part of the base 111 via the recesses and, in this state, fastened to the top guide mounting part by respective set screws 149. The mounting position of the top guides 141, 143 can be individually adjusted, with the respective set screws 149 loose, by moving the top guides in a rotational manner with respect to the top guide mounting part in a direction transverse to the cutting direction of the blade 113.

In this embodiment, as described above, the two identically shaped top guides 141, 143 are arranged side by side in the cutting direction of the blade 113 on the front end portion of the base 111. Further, the position of the top guides 141, 143 with respect to the blade 113 can be adjusted, with the respective set screws 149 loose, by moving the top guides in a rotational manner in a direction transverse to the cutting direction (the direction of the face) of the blade 113. Therefore, if a deviation is caused between the indicating direction of the top guides 141, 143 (the direction indicating faces 145a, 147a) and the cutting direction of the blade 113, an adjustment can be made to correct the deviation (in such a manner that the front and rear direction indicating faces 145a, 147a are aligned with an extension line of the face of the blade 113), for example, by using a ruler. In this manner, the cutting direction of the blade 113 can be exactly indicated. As a result, the circular saw 100 which is capable of high-precision cutting can be provided.

Further, by using the direction indicating faces 145a, 147a of the front and rear top guides 141, 143, indication of the cutting direction of the blade 113 and positioning of the blade 113 with respect to the cutting line L, or the parallelism to the face of the blade 113 and the parallelism to the cutting line L, can be more exactly achieved. Therefore, higher-precision cutting operation can be performed. Further, in this embodiment, the two top guides 141, 143 having the same shape can be designed as common parts, so that cost reduction can be achieved.

Further, in the above-described second embodiment, the front and rear top guides 141, 143 are described as being provided in order to indicate the cutting direction of the blade 113, but only either one of the top guides 141, 143 may be provided. In this case, it is preferable to provide the front top guide 141.

### (Third Embodiment)

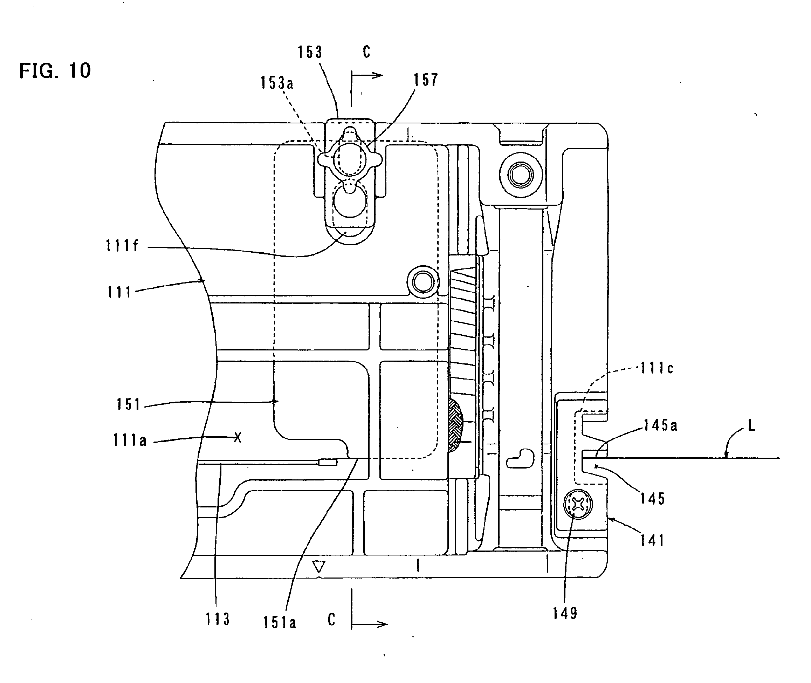

A third embodiment is now explained with reference to FIGS. 10 to 12. This embodiment is a modification of the cutting direction indicating technique for indicating the cutting direction of the blade 113. In place of the rear top guide 143 according to the above-described second embodiment, a cutting edge plate 151 is utilized to form a cutting direction indicating member.

In this embodiment, the top guide 141 having the same construction as that of the second embodiment is provided on the front end portion of the base 111, and a structure of mounting the top guide 141 on the base 111 also has the same construction. Therefore, the front top guide 141 is given the same numeral as that of the second embodiment and its description is omitted in this embodiment.

The cutting edge plate 151 which is utilized as a cutting direction indicating member is used as a member for preventing burrs and fuzz by pressing the upper surface of the workpiece during the operation of cutting the workpiece. Therefore, as shown, the cutting edge plate 151 is disposed in a recess 111e formed in the underside of the base 111 on the front side of the blade 113. In this state, not according to the invention, the cutting edge plate 151 can slide in a direction transverse to the cutting direction of the blade 113 (the direction of the rotation axis of the blade 113). Further, the underside of the cutting edge plate 151 disposed in the recess is flush with or slightly recessed with respect to the underside of the base 111.

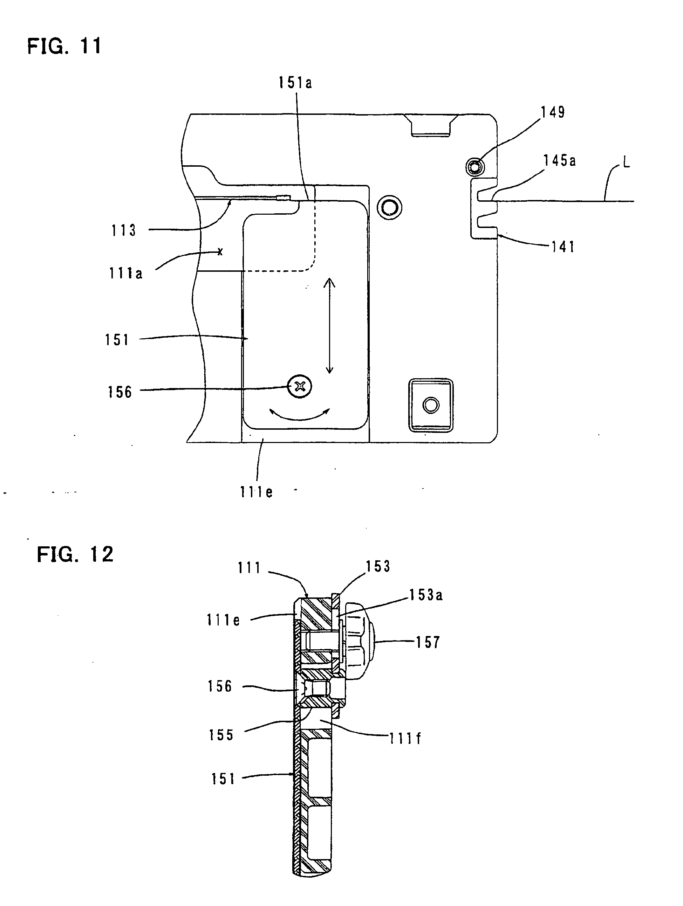

As shown in FIGS. 10 and 11, one end face of the cutting edge plate 151 in the direction of its movement faces an opening 111a which is formed in the base 111 in order to protrude the blade 113. This end face forms a direction indicating face 151a for indicating the cutting direction of the blade 113. The direction indicating face 151a is a feature that corresponds to the "direction indicating part" .

As shown in FIGS. 10 and 12, the cutting edge plate 151 is connected to a mounting plate 153 disposed on the upper surface of the base 111, via a connecting piece 155. The connecting piece 155 and the mounting plate 153 are swaged together, and the connecting piece 155 and the cutting edge plate 151 are clamped together by a screw 156, so that the cutting edge plate 151 is integrated with the mounting plate 153. The connecting piece 155 is loosely fitted in a slot 111f formed through the base 111 in the vertical direction (the direction of the thickness) and can move in a direction transverse to the cutting direction of the blade 113 (the direction of the rotation axis of the blade 113).

The mounting plate 153 has a slot 153a extending in a direction transverse to the cutting direction of the blade 113 (the direction of the rotation axis of the blade 113). The mounting plate 153 is fastened to the base 111 by an adjusting screw 157 which is screwed into the base 111 through the slot 153a. Therefore, with the adjusting screw 157 loose, the position of the cutting edge plate 151 with respect to the blade 113 can be adjusted by moving the cutting edge plate 151 together with the mounting plate 153 in a rotational manner in a direction transverse to the cutting direction (the direction of the face) of the blade 113 within a range allowed by the slot 111f of the base 111 and the slot 153a of the mounting plate 153.

In this embodiment, as described above, the one top guide 141 and the cutting edge plate 151 located rearward of the top guide 141 are used to indicate the cutting direction of the blade 113. Further, each of the top guide 141 and the cutting edge plate 151 can be individually adjusted in position with respect to the blade 113 by moving it with respect to the base 111 in a rotational manner in a direction transverse to the cutting direction (the direction of the face) of the blade 113. Therefore, if a deviation is caused between the indicating directions of the top guide 141 and the cutting edge plate 151 and the cutting direction of the blade 113, in the same manner as in the above-described embodiments, an adjustment can be made to correct the deviation (in such a manner that the direction indicating faces 145a, 151a are aligned with an extension line of the face of blade 113). In this manner, the cutting direction of the blade 113 can be exactly indicated. As a result, the circular saw 100 which is capable of high-precision cutting can be provided.

According to this embodiment, particularly, the cutting direction of the blade 113 can be indicated by utilizing an existing part or the cutting edge plate 151, so that a rational mechanism of indicating the cutting direction of the blade 113 can be realized.

### Description of Numerals

100 circular saw (cutting machine)
101 circular saw body (tool body)
103 blade case
104 safety cover
105 motor housing
107 gear housing
109 handgrip
109a trigger switch
111 base
111a opening (cutting edge)
111b notch for cutting-line alignment
111c notch for cutting-line alignment
111d observation hole
111e recess
111f slot
113 blade (saw blade)
113a rotation spindle
115 chips discharge tube
117 observation hole
121 top guide (blade cutting direction indicating member)
123 notch for cutting-line alignment
123a front direction indicating face (second direction indicating part)
125 projection
125a rear direction indicating face (first direction indicating part)
127 set screw
129 recess
131 top guide mounting part
131a screw hole
133 notch for cutting-line alignment
133a direction indicating face for bevel cutting
141 front top guide
143 rear top guide
145 notch for cutting-line alignment
147 notch for cutting-line alignment
145a front direction indicating face
147a rear direction indicating face
149 set screw
151 cutting edge plate
151a direction indicating face
153 mounting plate
153a slot
155 connecting piece
156 screw
157 adjusting screw

## Claims

1. A cutting machine comprising
a tool body (101) having a blade (113) which is rotationally driven to cut a workpiece,
a base (111) having an opening (111a) through which part of the blade (113) protrudes downward, the base (111) being placed on an upper surface of the workpiece and moved together with the tool body (101) in order to cut the workpiece by the blade (113), and
a blade cutting direction indicating member (121; 141) that indicates a cutting direction of the blade (113), the member (121; 141) formed on a front end of the base (111) in a direction of movement of the base (111) and is adapted as a blade positioning member to position the blade (113) with respect to a cutting line marked on the workpiece,
**characterized in that** the blade cutting direction indicating member (121; 141) is adjustable in mounting position with respect to the base (111) by being movable in a rotational manner in a direction transverse to the cutting direction of the blade (113).

2. The cutting machine as defmed in claim 1, wherein the blade cutting direction indicating member (121; 141) is adjustable in mounting position with respect to the base (111) by being movable in a parallel manner in the direction transverse to the cutting direction of the blade (113).

3. The cutting machine as defined in claim 1 or 2, wherein the blade cutting direction indicating member (121) has a first direction indicating part (125a) to indicate the cutting direction of the blade (113) and a second direction indicating part (123a) to indicate the same line as the first direction indicating part (125a), the direction indicating parts (123a, 125a) being integrally formed with the blade cutting direction indicating member (121), and wherein an observation hole (117) for cutting-line alignment is provided in the base (111) between the blade (113) and the blade cutting direction indicating member (121), and the first direction indicating part (125a) is located above the observation hole (117), and the second direction indicating part (123a) is located forward of the first direction indicating part (125a).

4. The cutting machine as defined in claim 3, wherein the first direction indicating part (125a) includes a side surface of a projection (125) which projects in a direction opposite to the cutting direction of the blade (113) and faces the observation hole (117), and the second direction indicating part (123a) includes a side surface of a notch (123) which is recessed in a direction opposite to the cutting direction of the blade (113).

5. The cutting machine as defined in any one of claims 1 to 4, wherein two blade cutting direction indicating members (141, 143) having the same shape are provided and arranged side by side in the cutting direction of the blade (113) with respect to the base (111).

6. The cutting machine as defined in any one of claims 1 to 5, wherein a cutting edge plate (151) is provided on an underside of the base (111), and an end of the cutting edge plate (151) which is visible via an opening (111a) of the base (111) forms a direction indicating part (151a) for indicating the cutting direction of the blade (113), and the cutting edge plate (151) is adjustable in mounting position with respect to the underside of the base (111) by being movable in parallel or in a rotational manner in a direction transverse to the cutting direction of the blade (113) and also adapted as the blade cutting direction indicating member.

7. The cutting machine as defined in any one of claims 1 to 6, wherein the base (111) has a protrusion (131) which protrudes from the upper surface of the base (111) and extends in a direction transverse to the cutting direction of the blade (113), and the blade cutting direction indicating member (121; 141) has a recess (129) shaped to conform to the protrusion (131) and is loosely fitted over the protrusion (131) via the recess (129) such that the blade cutting direction indicating member (121; 141) can move in parallel and/or in a rotational manner in a direction transverse to the cutting direction of the blade (113).

8. The cutting machine as defined in claim 7, wherein the blade cutting direction indicating member (121; 141) is fastened to the protrusion (131) by a screw (127) and the protrusion (131) has a circular fastening part having a screw hole (131a).

## Patentansprüche

1. Schneidemaschine mit
einem Werkzeugkörper (101), der eine Schneide (113) aufweist, die zum Schneiden eines Werkstückes drehend angetrieben wird,
einer Basis (111), die eine Öffnung (111a) aufweist, durch welche ein Teil der Schneide (113) nach unten vorsteht, bei der die Basis (111) auf einer oberen Oberfläche des Werkstückes gesetzt wird und zusammen mit dem Werkzeugkörper (101) zum Schneiden des Werkstückes durch die Schneide (113) bewegt wird, und
einem Schneideblattschneiderichtunganzeigebauteil (121; 141), das eine Schneiderichtung des Schneideblattes (113) anzeigt, bei der das Bauteil (121; 141) an einem vorderen Ende der Basis (111) in einer Bewegungsrichtung der Basis (111) ausgebildet ist und angepasst ist, als ein Schneideblattpositionierungsbauteil das Schneideblatt (113) in Bezug auf eine Schneidelinie, die auf dem Werkstück markiert ist, zu positionieren,
**dadurch gekennzeichnet, dass** das Schneideblattschneiderichtungsanzeigebauteil (121; 141) in einer Anbringungsposition in Bezug auf die Basis (111) justierbar ist, indem es in einer drehenden Weise in einer Richtung quer zu der Schneiderichtung des Schneideblattes (113) bewegbar ist.

2. Schneidemaschine nach Anspruch 1, bei dem das Schneideblattschneiderichtungsanzeigebauteil (121; 141) in der Anbringungsposition in Bezug auf die Basis (111) justierbar ist, indem es in einer parallelen Weise in der Richtung quer zu der Schneiderichtung des Schneideblattes (113).

3. Schneidemaschine nach Anspruch 1 oder 2, bei dem das Schneideblattschneiderichtungsanzeigebauteil (121) einen ersten Richtungsanzeigeteil (125a) zum Anzeigen der Schneiderichtung des Schneideblattes (113) und einen zweiten Richtungsanzeigeteil (121a) zum Anzeigen der gleichen Linie, wie der erste Richtungsanzeigeteil (125a), aufweist, bei der die Richtungsanzeigeteile (123a, 125a) integral mit dem Schneideblattschneiderichtungsanzeigebauteil (121) ausgebildet sind, und bei der ein Beobachtungsloch (117) zum Fluchten der Schneidelinie in der Basis (111) zwischen dem Schneideblatt (113) und dem Schneideblattschneiderichtungsanzeigebauteil (121) vorgesehen ist, und der erste Richtungsanzeigeteil (125) liegt über dem Beobachtungsloch (117) und der zweite Richtungsanzeigeteil (123a) liegt vor dem ersten Richtungsanzeigeteil (125a) angeordnet.

4. Schneidemaschine nach Anspruch 3, bei der der erste Richtungsanzeigeteil (125a) eine Seitenoberfläche eines Vorsprungs (125) enthält, der in eine Richtung entgegengesetzt zu der Schneiderichtung der Schneide (113) vorspringt und dem Beobachtungsloch (117) zugewandt ist, und der zweite Richtungsanzeigeteil (123a) eine Seitenoberfläche einer Kerbe (123) enthält, welche in einer Richtung entgegengesetzt zu der Schneiderichtung des Schneideblattes (113) ausgenommen ist.

5. Schneidemaschine nach einem der Ansprüche 1 bis 4, bei der zwei Schneideblattschneiderichtungsanzeigebauteile (141, 143), die die gleiche Form aufweisen, vorgesehen sind, und Seite an Seite in der Schneiderichtung des Schneideblattes (113) in Bezug auf die Basis (111) angeordnet sind.

6. Schneidemaschine nach einem der Ansprüche 1 bis 5, bei der eine Schneidekantenplatte (151) an einer Unterseite der Basis (111) vorgesehen ist, und ein Ende der Schneidekantenplatte (151), das durch eine Öffnung (111a) der Basis (111) sichtbar ist, einen Richtungsanzeigeteil (151) zum Anzeigen der Schneiderichtung des Schneideblattes (113) ausbildet, und die Schneidekantenplatte (151) in der Montageposition in Bezug auf die Unterseite der Basis (111) justierbar ist, indem es in einer parallelen Weise oder in einer drehenden Weise in der Richtung quer zu der Schneiderichtung des Schneideblattes (113) bewegbar ist.

7. Schneidemaschine nach einem der Ansprüche 1 bis 6, bei der die Basis (111) einen Vorsprung (131) aufweist, der von der oberen Oberfläche der Basis (111) vorsteht und sich in einer Richtung quer zu der Schneiderichtung des Schneideblattes (113) erstreckt, und das Schneideblattschneiderichtungsanzeigebauteil (121; 141) eine Ausnehmung (129) aufweist, die konform zu dem Vorsprung (131) ausgeformt ist und ist lose über dem Vorsprung (131) über die Ausnehmung (129) gepasst, so dass das Schneideblattschneiderichtungsanzeigebauteil (121; 141) sich parallel und/oder in einer drehenden Weise in einer Richtung quer zu der Schneiderichtung des Schneideblatts (113) bewegen kann.

8. Schneidemaschine nach Anspruch 7, bei der das Schneideblattschneiderichtungsanzeigebauteil (121; 141) an den Vorsprung (131) durch eine Schraube (127) befestigt ist und der Vorsprung (131) einen kreisförmigen Befestigungsteil aufweist, der ein Schraubenloch (131a) aufweist.

## Revendications

1. Machine de coupe comportant
un corps d'outil (101) présentant une lame (113) qui est entraînée en rotation pour découper une pièce à usiner,
une base (111) ayant une ouverture (111a) à travers laquelle une partie de la lame (113) fait saillie vers le bas,
la base (111) étant placée sur une surface supérieure de la pièce et déplacée avec le corps d'outil (101) afin de couper la pièce à usiner par la lame (113), et
un organe indiquant une direction de coupe de la lame (121 ; 141) qui indique une direction de coupe de la lame (113), l'organe (121 ; 141) formé sur une extrémité avant de la base (111) dans une direction de déplacement de la base (111) et qui est adapté comme un élément de positionnement de lame pour positionner la lame (113) par rapport à une ligne de coupe marquée sur la pièce à usiner,
**caractérisée en ce que** l'organe indiquant la direction de coupe de la lame (121 ; 141) est réglable en position de montage par rapport à la base (111) en étant déplaçable de manière rotative dans une direction transversale à la direction de coupe de la lame (113).

2. Machine de coupe selon la revendication 1, dans laquelle l'organe indiquant la direction de coupe de la lame (121 ; 141) est réglable en position de montage par rapport à la base (111) en étant déplaçable de manière parallèle dans la direction transversale à la direction de coupe de la lame (113).

3. Machine de coupe selon la revendication 1 ou la revendication 2, dans laquelle l'organe indiquant la direction de coupe de la lame (121) comporte un élément indiquant une première direction (125a) pour indiquer la direction de coupe de la lame (113) et un élément indiquant une seconde direction (123a) pour indiquer la même ligne que l'élément indiquant la première direction (125a), les éléments indiquant les directions (123a, 125a) étant formés intégralement avec l'organe indiquant la direction de coupe de la lame (121), et dans laquelle un trou d'observation (117) pour l'alignement de la ligne de coupe est prévu dans la base (111) entre la lame (113) et l'organe indiquant la direction de coupe de la lame (121), et l'élément indiquant la première direction (125a) étant situé au-dessus du trou d'observation (117), et l'élément indiquant la seconde direction (123a) étant situé à l'avant de l'élément indiquant la première direction (125a).

4. Machine de coupe selon la revendication 3, dans laquelle l'élément indiquant la première direction (125a) comprend une surface latérale d'une saillie (125) qui fait saillie dans une direction opposée à la direction de coupe de la lame (113) et fait face au trou d'observation (117), et l'élément indiquant la seconde direction (123a) comprend une surface latérale d'une encoche (123) qui est en retrait dans une direction opposée à la direction de coupe de la lame (113).

5. Machine de coupe selon l'une quelconque des revendications 1 à 4, dans laquelle deux organes indiquant une direction de coupe de la lame (141 ; 143) ayant la même forme sont prévus et disposés côte à côte selon la direction de coupe de la lame (113) par rapport à la base (111).

6. Machine de coupe selon l'une quelconque des revendications 1 à 5, dans laquelle une plaque de bord de coupe (151) est prévue sur une face inférieure de la base (111), et une extrémité de la plaque de bord de coupe (151) qui est visible par l'intermédiaire d'une ouverture (111a) de la base (111) forme un élément indiquant une direction (151 a) pour indiquer la direction de coupe de la lame (113), et la plaque de bord de coupe (151) est réglable en position de montage par rapport à la face inférieure de la base (111) en étant déplaçable de manière parallèle ou rotative dans une direction transversale à la direction de coupe de la lame (113) et également adaptée en tant qu'organe indiquant la direction de coupe de la lame.

7. Machine de coupe selon l'une quelconque des revendications 1 à 6, dans laquelle la base (111) a une saillie (131) qui fait saillie à partir de la surface supérieure de la base (111) et qui s'étend dans une direction transversale à la direction de coupe de la lame (113), et l'organe indiquant la direction de coupe de la lame (121 ; 141) présente un évidement (129) formé pour se conformer à la saillie (131) et qui est librement arrangé sur la saillie (131) par l'intermédiaire de l'évidement (129) de telle sorte que l'organe indiquant la direction de coupe de la lame (121 ; 141) peut se déplacer d'une manière parallèle et/ou rotative dans une direction transversale à la direction de coupe de la lame (113).

8. Machine de coupe selon la revendication 7, dans laquelle l'organe indiquant une direction de coupe de la lame (121 ; 141) est fixé à la saillie (131) par une vis (127) et la saillie (131) a une partie de fixation circulaire ayant un trou de vis (131 a).
